# FASCICULE DE BREVET EUROPEEN

(11) **EP 0 541 698 B1**
(45) Date de publication et mention de la délivrance du brevet: **18.05.1994**
(21) Numéro de dépôt: 91915125.8
(22) Date de dépôt: 02.08.1991
(51) Int. Cl.: B62D 1/24, B66F 9/06, B62D 15/00

(54) **DISPOSITIF DE CHANGEMENT DE DIRECTION SUR PLACE POUR CHARIOT DE MANUTENTION**
AUF-DER-STELLE-UMLENKVORRICHTUNG FÜR FLURFÖRDERFAHRZEUG
STATIONARY DIRECTION CHANGING DEVICE FOR A HANDLING TROLLEY

(30) Priorité: 03.08.1990 FR 9010165
(43) Date de publication de la demande: 19.05.1993
(73) Titulaire: JUAN, Richard, F-69360 Saint Symphorien d'Ozon (FR)
(72) Inventeur: JUAN, Richard, F-69360 Saint Symphorien d'Ozon (FR)
(74) Mandataire: Perrier, Jean-Pierre
(86) Numéro de dépôt international: FR9100646
(87) Numéro de publication internationale: WO9202397

(56) Documents cités:
- DE-A- 492 408
- FR-A- 456 653
- US-A- 503 581
- US-A- 678 051
- PATENT ABSTRACTS OF JAPAN, vol.7, no. 265 (M-258)(1410), 25 November1983

## Description

"Dispositif de changement de direction sur place pour chariot de manutention".

Les moyens de manutention, actuellement utilisés, pour transporter des charges ou des pièces en cours de fabrication, par exemple, entre un lieu de fabrication ou de stockage et un autre lieu de fabrication, de stockage ou d'expédition, sont constitués soit par des chariots élévateurs à conducteur porté, soit par des chariots autonomes de type filoguidés, à guidage optronique ou à repérage trigonométrique, par laser ou autre.

Quels que soient leurs moyens de conduite, les chariots actuels nécessitent des aires d'évolution importantes, en rapport avec le rayon maximal de leur courbe d'évolution, c'est à dire en fonction de la structure et de la position de leurs roues directrices. Le rayon est d'ailleurs d'autant plus grand que le chariot a un encombrement important et que la masse est grande. En d'autres termes, les évolutions de ces chariots exigent d'autant plus de place que les charges portées sont lourdes, ce qui oblige à organiser des tracés de circulation consommant beaucoup d'espace, au détriment des aires de production et de stockage.

Un autre inconvénient de ce mode de changement de direction est qu'il apporte des imprécisions sur la position du chariot en fin de changement de direction. Si ces imprécisions peuvent être rattrapées avec les chariots à conducteur porté, il n'en est pas de même avec des chariots autonomes En effet, dans ce cas, les imprécisions de trajectoire circulaires s'ajoutent à la dérive transversale, résultant du déplacement rectiligne du chariot, et affectent donc la précision du positionnement final de ce dernier.

On connaît par la demande de brevet japonais 58 145 573 un dispositif de changement de direction pour un châssis motorisé comportant, d'une part, des moyens pour déplacer verticalement une couronne d'appui entre une position de transport, dans laquelle elle est au-dessus du sol, et une position de pivotement, dans laquelle elle est en appui sur le sol et soulève le chariot, et, d'autre part, des moyens aptes à faire pivoter le chariot, en position soulevée, par rapport à la couronne.

Un tel dispositif réduit l'espace nécessaire aux changements de direction du chariot, mais il n'apporte aucune solution au manque de précision de cette rotation, et ne peut donc pas être utilisé sur un chariot autonome transférant, sous contrôle à distance, des charges entre deux postes, de fabrication ou de stockage, avec positionnement de cette charge par rapport aux moyens la recevant.

Par ailleurs, lorsque le chariot est muni de moyens de manutention verticale de la charge, le coût de ceux-ci s'ajoute à celui des moyens d'élévation du chariot, ce qui conduit à un renchérissement du chariot.

La présente invention a pour but de fournir un dispositif de changement de direction qui remédie à ces inconvénients, c'est à dire qui permette de réduire le rayon des trajectoires circulaires du chariot, tout en réduisant les imprécisions de positionnement et, cela quels que soient l'encombrement de ce chariot et la masse de la charge portée par lui.

A cet effet, dans le dispositif selon l'invention, les moyens pour déplacer verticalement la couronne comprennent un coulisseau qui, monté coulissant dans des glissières verticales du châssis et portant, calé à son extrémité inférieure, un plateau circulaire sur lequel la couronne est montée libre en rotation, d'une part, supporte dans sa partie supérieure, les moyens de manutention verticale de la charge, et, d'autre part, est relié au châssis par des moyens moteurs aptes à assurer les déplacements verticaux du chariot et ceux de la charge, ces moyens étant munis de moyens de détection de la course rectiligne effectuée, et asservis à des moyens de pilotage embarqués, tandis que les moyens moteurs provoquant la rotation de la couronne sont également munis de moyens de détection de la course circulaire réalisée et asservis à des moyens de pilotage embarqués.

Il ressort de ce qui précède que les mêmes moyens moteurs régissent les mouvements verticaux du chariot et ceux de la charge, ce qui permet de réduire le coût du chariot mais surtout de bénéficier, dans les deux mouvements, de la précision apportée par les moyens de pilotage asservissant ces moyens moteurs. De plus, la précision procurée dans la rotation du châssis par rapport à la couronne, permet de corriger la dérive transversale du chariot et de réduire, en fin de course de ce chariot, les imprécisions de positionnement de la charge qu'il porte par rapport aux moyens de réception de cette charge.

Dans une forme d'exécution de l'invention, les moyens moteurs provoquant les déplacement verticaux et les moyens moteurs provoquant la rotation sont chacun constitués par un servomoteur avec tachymètre et codeur, tandis que leurs moyens de pilotage comprennent un calculateur, embarqué sur le chariot et relié par une liaison hertzienne à un serveur fixe, lui-même relié à des capteurs disposés à poste fixe de part et d'autre de la trajectoire du chariot et détectant les écarts de position de ce chariot par rapport à une trajectoire théorique.

Grâce à cet agencement, lorsque le calculateur embarqué communique aux moyens moteurs un ordre de mise en mouvement sur une course donnée, il prend en compte les corrections qui lui sont communiquées par le serveur, après analyse par celui de la position du chariot par rapport à sa position théorique, et assure ainsi une autocorrection à chaque changement de direction, ce qui supprime la dérive transversale et améliore la précision du positionnement de la charge au poste de réception.

Dans une forme d'exécution de l'invention, le plateau est solidaire de moyens d'indexation du pivotement angulaire coopérant avec des moyens complémentaires liés à la couronne.

Ainsi, en fin de rotation, les moyens d'indexation positionnent positivement le chariot par rapport à la couronne, et garantissent la précision du positionnement de ce chariot, lorsque ses moyens d'entraînement en translation reprennent contact avec le sol.

D'autres caractéristiques et avantages ressortiront de la description qui suit en référence au dessin schématique annexé représentant, à titre d'exemple non limitatif, une forme d'exécution du dispositif selon l'invention dans le cas de son application à un chariot autonome pour le transport de bobines.
Figure 1 est une vue en perspective du chariot,
Figures 2 et 3 en sont des vues de côté en coupe transversale avec le dispositif respectivement en position de transport et en position de pivotement,
Figure 4 est une vue en plan par dessus du chariot avant rotation.

Dans ces dessins, 2 désigne de manière générale le châssis du chariot dont les moyens d'entraînement en translation sont constitués par deux chenilles 3 entraînées par des roues motrices 4 et guidées par des roues de renvoi 5. Les roues motrices 4 sont reliées à un servomoteur 4a avec tachymètre et codeur.

Selon l'invention, le dispositif de changement de direction comprend un coulisseau 6 monté coulissant dans des glissières verticales 7 solidaires du châssis 2. Ce coulisseau est lié, par son extrémité inférieure, à un plateau circulaire 8 sur la périphérie duquel est montée libre en rotation une couronne 9 d'appui au sol. Une bague de roulement à rouleaux 10 est interposée entre le plateau 8 et la couronne 9.

Le coulisseau 6 est relié à des moyens aptes à lui communiquer un mouvement de déplacement vertical, moyens qui, dans cette forme d'exécution, sont constitués par un servomoteur électrique 12 avec tachymètre et codeur 12a entraînant, par l'intermédiaire d'une transmission positive par poulies et courroies crantées 13, une vis verticale 14. Cette vis, montée libre en rotation dans des paliers 15 solidaires du châssis, coopère avec un écrou 16, lié au coulisseau 6 par une pièce de liaison 17 le calant également en rotation.

La couronne 9 est reliée à des moyens aptes à lui communiquer un mouvement de rotation relatif autour d'un axe vertical, moyens qui, dans cette forme d'exécution, sont constitués par un moteur électrique 18, avec tachymètre et codeur 18a, fixé sur le plateau 8. L'arbre de sortie 19 de ce moteur entraîne un pignon 20 s'engrenant sur une denture périphérique 22 de la couronne 9.

Ce chariot étant destiné à transporter des bobines 31 de bandes métalliques enroulées en spirales, le coulisseau 6 est solidaire d'un éperon 23 saillant longitudinalement sur l'avant du chariot.

Il faut ici noter que les mouvements verticaux nécessaires au transfert de la charge sont assurés par les moyens commandant les déplacements verticaux du coulisseau et ne nécessitent donc aucun moyen moteur complémentaire.

Il est bien évident que le dispositif selon l'invention s'applique également aux chariots comportant tout autre dispositif pour supporter ou saisir des charges et, en particulier, aux chariots comportant, à la place de l'éperon, une fourche de levage ou une plate-forme, fourche et plate-forme qui sont alors solidaires du coulisseau 6 et en saillie vers l'avant de celui-ci. De même, le coulisseau 6 qui s'étend verticalement sur la totalité de la hauteur du chariot peut bien entendu présenter une hauteur inférieure, en fonction des besoins de manutention, et être aménagé pour recevoir tous types d'outils adaptés à l'usage du chariot.

Ce chariot autonome est muni de batterie 21 assurant l'alimentation électrique de ses servomoteurs 12 et 18 et de celui d'entraînement 4a des roues 4. Ces moteurs sont alimentés à travers des moyens de pilotage 30 comprenant un calculateur 32 relié aux tachymètres et codeurs des moteurs. Ce calculateur est relié par une liaison hertzienne, schématisée par l'antenne 33, à un serveur, non représenté et lui-même relié à des capteurs de position, disposés de part et d'autre de la trajectoire du chariot entre ses postes, respectivement, de chargement et de déchargement.

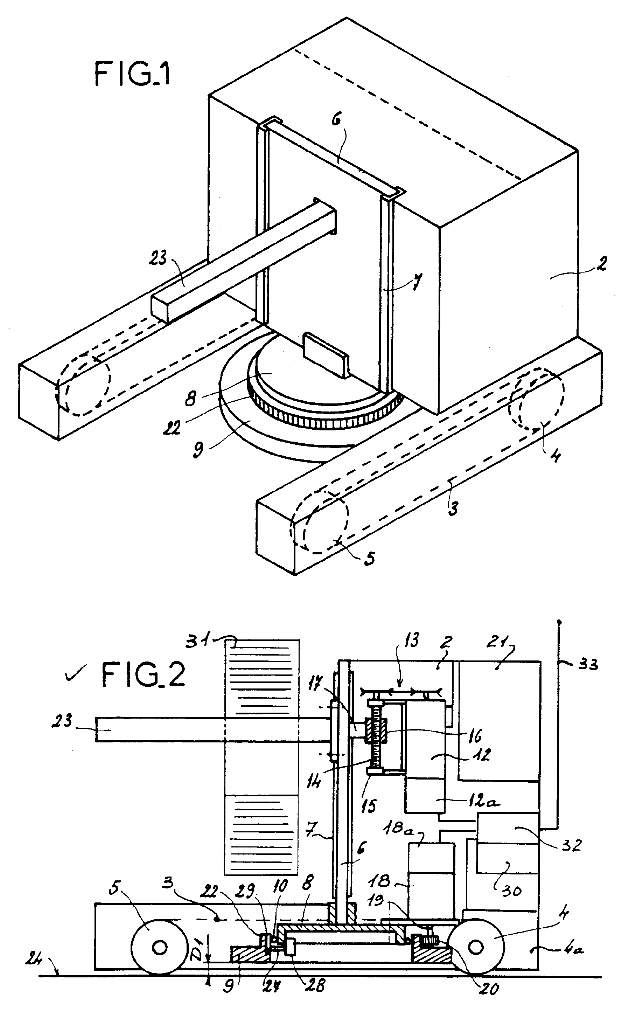

En position normale de transport, et comme le montre la figure 2, le coulisseau 6, le plateau 8 et la couronne 9 sont dans une position verticale telle que la couronne 9 est à une distance D1 du sol 24. Cette distance est suffisamment grande pour permettre les déplacements verticaux de l'éperon 23 pour saisir la bobine ou la déposer sur un support, respectivement, à la sortie d'une machine de fabrication et à un lieu de stockage. A titre d'exemple, cette distance a une valeur de l'ordre de 50 mm, mais elle peut être plus importante en fonction de la plus grande course que doit effectuer l'outil de préhension au poste de chargement ou au poste de déchargement.

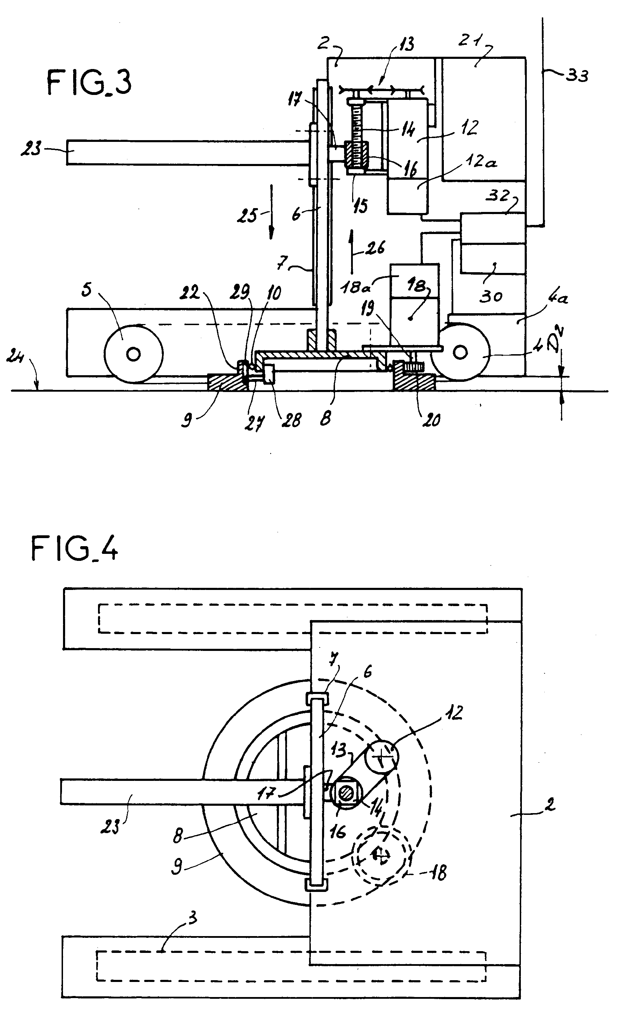

Lorsque le chariot en déplacement arrive dans une zone de pivotement, il est soumis à une décélération de sa vitesse de translation, puis est arrêté dans une position longitudinale précise, grâce à son servomoteur 4a contrôlée par les moyens de pilotage 30. Dès l'arrêt, le servomoteur 12 est alimenté de manière à entraîner en rotation la vis 14 pour communiquer au coulisseau 6 un déplacement vertical vers le bas, dans le sens de la flèche 25 de figure 3. Durant ce mouvement, la couronne 9 portée par le plateau 8 vient en contact avec le sol, comme montré à la figure 3. A partir de là, la rotation de la vis 14 se continuant, ce n'est plus le coulisseau 6 qui se déplace vers le bas, mais l'ensemble du châssis 2 qui se déplace verticalement vers le haut, dans le sens de la flèche 26, en entraînant avec lui les moyens d'entraînement en translation longitudinale du chariot et, en l'occurrence les roues 4 et 5 avec les chenilles 3. A la fin de ce mouvement, et comme le montre la figure 3, les roues et chenilles sont séparées du sol par une distance D2, ayant par exemple, une valeur de l'ordre de 10 mm.

Dans cette position, l'alimentation du servomoteur 18 entraîne la mise en rotation du pignon 20 qui, par engrènement sur la denture 22 de la couronne 9, provoque la rotation du plateau 8 par rapport à la couronne 9, c'est à dire du coulisseau 6, de l'éperon 23, de la charge et de l'ensemble du châssis 2. Cette rotation, qui peut s'effectuer sur une valeur angulaire quelconque, nécessite une surface d'évolution au plus égale au plus grand rayon R de l'encombrement du châssis (figure 4), c'est à dire à une surface qui est très inférieure à celle nécessaire pour la rotation d'un chariot muni de roues directrices.

Cette rotation est mesurée par le tachymètre et interrompue par le codeur du servomoteur 18 sous le contrôle du calculateur embarqué 32. Parallèlement, ce calculateur a reçu, par la liaison hertzienne 33, les informations que lui a adressé le serveur et qui prennent en compte les corrections de trajectoire définies par ce serveur après comparaison de la position réelle du chariot, détectée par les capteurs fixes, avec une position théorique idéale mémorisée.

A la fin de la rotation, le servomoteur 12 entraîne en rotation, en sens inverse, la vis 14 de manière, dans une première phase, à amener les trains de chenilles 3 en contact avec le sol, puis, dans une deuxième phase, à ramener le coulisseau 6 et les éléments qu'il porte dans la position de transport représentée à la figure 2.

Dans une forme d'exécution, et pour améliorer encore la précision du positionnement de la rotation du chariot, le plateau 8 est solidaire de moyens d'indexation coopérant avec des moyens complémentaires.

Dans la forme d'exécution représentée aux figures 2 et 3, les moyens d'indexation sont constitués par un doigt radial 27 monté coulissant par rapport au plateau 8. Ce doigt est disposé dans la partie interne du plateau 8 et est reliée à des moyens 28 aptes à le déplacer transversalement, tel qu'un électroaimant. Son extrémité externe et libre coopère avec des cannelures de positionnement 29 ménagées sur la face interne de la couronne 9.

On conçoit que par un choix judicieux du pas et du module des cannelures et de la dimension du doigt 27, et que par une répartition angulaire précise des cannelures, il soit possible d'obtenir un positionnement précis du chariot en fin de rotation.

Dans une autre forme d'exécution l'indexation est assurée par le frein dont est muni le servomoteur 18, comme d'ailleurs les autres servomoteurs 4a et 12.

Il faut ici noter que la précision de la rotation, avec ou sans indexation, est indépendante de la charge, des moyens de maintien de cette charge et de la distance parcourue, de sorte que le dispositif selon l'invention peut être utilisé aussi bien pour des chariots de manutention destinés à porter des charges lourdes supérieures à 3 tonnes, que pour des chariots destinés à transporter des charges moyennes ou faibles ayant une valeur inférieure à 1 tonne, et cela sur des trajectoires de longueur quelconque.

Indépendamment de la réduction de la surface au sol nécessaire pour le pivotement du chariot, le dispositif selon l'invention permet d'éliminer dans les chariots autonomes l'incidence de la dérive transversale sur la précision du positionnement en fin de pivotement.

Il permet aussi, avec les mêmes moyens moteurs et les mêmes moyens de pilotage, de contrôler précisément les déplacements verticaux de la charge et, aux postes de chargement et de déchargement, de corriger des éventuels écarts de positionnement vertical des moyens de portage ou de réception de la charge, en tolérant ainsi, une moins grande précision dans le positionnement de ces moyens par rapport au sol et dans la planéité de ce sol.

Bien entendu l'invention ne se limite pas au chariot décrit ci-dessus, du type sur chenilles et à éperon, elle s'applique, au contraire , à tous chariots autonomes, quels que soient leurs moyens d'entraînement par rapport au sol et leurs moyens de portage d'une charge fixés sur le coulisseau 6, constituant porte-outil.

## Revendications

1. Dispositif de changement de direction sur place pour chariot de manutention, du type comportant un châssis (2) avec des moyens d'entraînement au moins en translation, des moyens aptes à porter une charge, des moyens pour déplacer verticalement une couronne (9) entre une position de transport, dans laquelle elle est au-dessus du sol, et une position de pivotement dans laquelle elle est en appui sur le sol et permet le soulèvement du chariot, et des moyens pour faire pivoter le chariot soulevé par rapport à la couronne, caractérisé en ce que les moyens pour déplacer verticalement la couronne (9) comprennent un coulisseau (6) qui, monté coulissant dans des glissières verticales (7) du châssis (2) et portant, calé à son extrémité inférieure, un plateau circulaire (8) sur lequel la couronne (9) est montée libre en rotation, d'une part, supporte dans sa partie supérieure les moyens (23) de manutention verticale de la charge, et, d'autre part, est relié au châssis par des moyens moteurs (12 à 16) aptes à assurer les déplacements verticaux du chariot (2) et ceux de la charge, munis de moyens de détection de la course rectiligne effectuée, et asservis à des moyens de pilotage embarqués (30), tandis que les moyens moteurs (18) provoquant la rotation de la couronne sont également munis de moyens de détection de la course circulaire réalisée et asservis aux moyens de pilotage embarqués (30).

2. Dispositif selon la revendication 1, caractérisé en ce que les moyens moteurs (12 à 16), provoquant les déplacement verticaux, et les moyens moteurs (18), provoquant la rotation, sont chacun constitués par un servomoteur avec tachymètre et codeur, tandis que leurs moyens de pilotage (30) comprennent un calculateur (32), embarqué sur le chariot et relié, par une liaison hertzienne à un serveur fixe, lui-même relié à des capteurs disposés à poste fixe de part et d'autre de la trajectoire du chariot et détectant les écarts de position de ce chariot par rapport à une trajectoire théorique.

3. Dispositif selon l'une quelconque des revendications 1 et 2, caractérisé en ce que les moyens fournissant les mouvements verticaux relatifs entre le châssis (2) et le coulisseau (6) comprennent un servomoteur électrique (12) dont le corps est fixé au châssis (2), une vis verticale (14), montée libre en rotation dans des paliers fixes (15) du châssis (2) et liée en rotation à l'arbre du moteur par une transmission positive (13) de mouvement circulaire, et un écrou (16), coopérant avec la vis (14) et calé en rotation par rapport à elle par les moyens (17) le liant au coulisseau.

4. Dispositif selon l'une quelconque des revendications 1 et 3, caractérisé en ce que les moyens fournissant le mouvement de rotation relatif entre le plateau (8) et la couronne (9) sont constitués par un servomoteur électrique (18) dont le corps est solidaire du plateau (8) et dont l'arbre de sortie est solidaire d'un pignon (20) engrenant avec une denture (22) ménagée à la périphérie de la couronne (9).

5. Dispositif selon l'une quelconque des revendications. 1 à 4, caractérisé en ce que les moyens aptes à porter la charge sont constitués par un éperon (23) saillant longitudinalement sur l'avant du coulisseau.

6. Dispositif selon l'une quelconque des revendications 1 à 4, caractérisé en ce que les moyens aptes à porter la charge sont constitués par un plateau horizontal solidaire du coulisseau.

7. Dispositif selon l'une quelconque des revendications 1 à 4, caractérisé en ce que les moyens aptes à porter la charge sont constitués par des fourches saillant longitudinalement sur l'avant du coulisseau.

8. Dispositif selon l'une quelconque des revendications 1 à 7, caractérisé en ce que le plateau (8) est solidaire des moyens (27) d'indexation du pivotement angulaire coopérant avec des moyens complémentaires (29) de la couronne.

9. Dispositif selon la revendication 8, caractérisé en ce que les moyens d'indexation du plateau sont constitués par un doigt radial (27) qui est attelé à des moyens (28) aptes à le déplacer longitudinalement et dont l'extrémité, externe et libre, est apte à coopérer avec l'une des cannelures de positionnement (29) ménagées sur la face interne de la couronne (9).

10. Dispositif selon 1' une quelconque des revendications 1 à 8, caractérisé en ce que les servomoteurs 4a, 12 et 18 sont munis d'un frein les calant en position arrêtée et constituant moyens d'indexation.

## Patentansprüche

1. Einrichtung zur Richtungsänderung auf der Stelle für ein Flurförderfahrzeug, umfassend ein Chassis (2) mit Antriebsmitteln zumindest für eine Verfahrbewegung, Mitteln zum Aufnehmen einer Last, Mitteln zum vertikalen Verstellen eines Kranzes (9) zwischen einer Transportstellung, bei der dieser sich oberhalb des Fußbodens befindet, und einer Schwenkstellung, bei der dieser sich auf dem Fußboden abstützt und ein Anheben des Fahrzeuges ermöglicht, und Mitteln zum Schwenken des angehobenen Fahrzeuges gegenüber dem Kranz, dadurch **gekennzeichnet**, daß die Mittel zum vertikalen Verstellen des Kranzes (9) einen Schlitten (6) umfassen, welcher in vertikalen Gleitschienen (7) des Chassis (2) verschiebbar montiert ist und an seinem unteren Ende eine daran fest angebrachte kreisförmige Platte (8) trägt, auf welcher der Kranz (9) drehfrei montiert ist, wobei der Schlitten einerseits in seinem oberen Bereich die Mittel (23) für die vertikale Handhabung der Last trägt und andererseits mit dem Chassis über eine Motoranordnung (12 bis 16) verbunden ist, die die vertikalen Verstellungen des Fahrzeuges (2) und die der Last bewirken, die ferner mit Mitteln zum Erfassen des ausgeführten gradlinigen Weges ausgestattet und eingebauten Steuermitteln (30) zugeordnet ist, während die die Drehung des Kranzes bewirkende Motoranordnung (18) ebenfalls mit Mitteln zum Feststellen des ausgeführten Drehweges ausgestattet und eingebauten Steuermitteln (30) zugeordnet ist.

2. Einrichtung nach Anspruch 1, dadurch **gekennzeichnet,** daß die die vertikalen Verstellungen bewirkende Motoranordnung (12 bis 16) und die die Drehung bewirkende Motoranordnung (18) jeweils durch einen Servomotor mit Tachymeter und Kodierer gebildet sind, während ihre Steuermittel (30) einen Rechner (32) umfassen, welcher in das Fahrzeug eingebaut und über eine Richtfunkverbindung mit einem festen Steuersender (Serveur) verbunden ist, welcher seinerseits mit an festen Orten zu beiden Seiten des Verfahrweges des Fahrzeuges angeordneten Aufnehmern verbunden ist, welche die Positionsabweichungen dieses Fahrzeuges gegenüber einem theoretischen Verfahrweg feststellen.

3. Einrichtung nach einem der Ansprüche 1 und 2, dadurch **gekennzeichnet,** daß die die relativen Vertikalbewegungen zwischen dem Chassis (2) und dem Schlitten (6) bewirkende Anordnung einen elektrischen Servomotor (12) umfassen, dessen Gehäuse am Chassis (2) befestigt ist, ferner eine vertikale Schraubenspindel (14), die drehfrei in festen Lagern (15) des Chassis (2) gelagert und mit der Welle des Motors über eine positive Drehbewegungs-Transmission (13) drehverbunden ist, und eine Mutter (16), die mit der Schraubenspindel (14) zusammenwirkt und gegenüber jener über die diese mit dem Schlitten verbindenden Mittel (17) drehfest angeordnet ist.

4. Einrichtung nach einem der Ansprüche 1 und 3, dadurch **gekennzeichnet,** daß die die relative Drehbewegung zwischen der Platte (8) und dem Kranz (9) bewirkende Anordnung durch einen elektrischen Servomotor (18) gebildet ist, dessen Gehäuse mit der Platte (8) fest verbunden ist und dessen Ausgangswelle mit einem Ritzel (20) fest verbunden ist, welches in eine Verzahnung (22) eingreift, die an der Peripherie des Kranzes (9) ausgebildet ist.

5. Einrichtung nach einem der Ansprüche 1 bis 4, dadurch **gekennzeichnet,** daß die Mittel zum Tragen der Last durch einen Balken (23) gebildet sind, welcher an der Vorderseite des Schlittens in Längsrichtung vorsteht.

6. Einrichtung nach einem der Ansprüche 1 bis 4, dadurch **gekennzeichnet,** daß die Mittel zum Tragen der Last durch eine mit dem Schlitten fest verbundene horizontale Platte gebildet sind.

7. Einrichtung nach einem der Ansprüche 1 bis 4, dadurch **gekennzeichnet**, daß die Mittel zum Tragen der Last durch eine Gabelanordnung gebildet sind, die an der Vorderseite des Schlittens in Längsrichtung vorsteht.

8. Einrichtung nach einem der Ansprüche 1 bis 7, dadurch **gekennzeichnet,** daß die Platte (8) mit Indexiermitteln (27) für die Winkelverschwenkung verbunden ist, die mit komplementären Mitteln (29) des Kranzes zusammenwirken.

9. Einrichtung nach Anspruch 8, dadurch **gekennzeichnet**, daß die Indexiermittel der Platte durch einen radialen Finger (27) gebildet sind, welcher mit Mitteln (28) für eine Längsverstellung desselben verbunden ist und dessen äußeres und freies Ende mit einer der Positionierrillen (29) zusammenwirkt, die an der Innenfläche des Kranzes (9) ausgebildet sind.

10. Einrichtung nach einem der Ansprüche 1 bis 8, dadurch **gekennzeichnet,** daß die Servomotoren (4a, 12 und 18) mit einer Bremse versehen sind, die diese in einer Haltepositon sichern und gleichzeitig Indexmiermittel bilden.

## Claims

1. A device for changing direction while stationary for a handling trolley, of the type including a chassis (2) with means for driving it at least in translation, means adapted to carry a load, means for vertically displacing a ring (9) between a transport position in which it is above the ground and a pivoting position in which it rests on the ground and permits the lifting of the trolley, and means to cause pivoting of the trolley raised with respect to the ring, characterised in that the means for vertically displacing the ring (9) includes a sliding element (6) which, slidably mounted in vertical slideways (7) of the chassis and carrying a circular plate (8) which is fixed to its lower end and on which the ring (9) is freely rotationally mounted, on the one hand supports at its upper portion the vertical load-handling means (23) and, on the other hand, is connected to the chassis by motor means (12-16) adapted to effect vertical displacement of the trolley (2) and of the load, provided with means for detecting the linear path travelled and controlled by an on-board control device (30), whilst the motor means (18) causing the rotation of the ring are also provided with means for detecting the circular path travelled and controlled by means of the on-board control device (30).

2. A device according to Claim 1, characterised in that the motor means (12-16) causing the vertical displacement and the motor means (18) causing the rotation are each constituted by a servo-motor with a tachometer and encoder, whilst their control means (30) include a computer (32) mounted on the trolley and connected by a hertzian connection to a fixed server, itself connected to sensors disposed at fixed stations at either side of the trolley trajectory and detecting the departures in position of the trolley with respect to a theoretical trajectory.

3. A device according to either of Claims 1 and 2, characterised in that the means providing the relative vertical movements between the chassis (2) and the sliding element (6) include an electrical servo-motor (12) of which the body is fixed to the chassis (2), a vertical screw (14) freely rotatably mounted in fixed bearings (15) of the chassis (2) and rotationally connected to the motor shaft by a positive circular movement transmission (13), and a nut (16) cooperating with the screw (14) and locked rotationally with respect to it by the means (17) connecting the nut to the sliding element.

4. A device according to either of Claims 1 and 3, characterised in that the means providing the relative rotational movement between the plate (8) and the ring (9) are constituted by an electrical servo-motor (18) of which the body is fixed to the plate (8) and of which the output shaft is connected to a pinion (20) meshing with teeth (22) formed on the periphery of the ring (9).

5. A device according to any one of Claims 1 to 4, characterised in that the means adapted to carry the load is constituted by a longitudinally projecting spur (23) on the front of the sliding element.

6. A device according to any one of Claims 1 to 4, characterised in that the means adapted to carry the load is constituted by a horizonal plate connected to the sliding element.

7. A device according to any one of Claims 1 to 4, characterised in that the means adapted to carry the load are constituted by longitudinally projecting forks on the front of the sliding element.

8. A device according to any one of Claims 1 to 7, characterised in that the plate (8) is connected to means (27) for indexing the angular pivoting cooperating with complementary means (29) of the ring.

9. A device according to Claim 8, characterised in that the indexing means of the plate is constituted by a radial projection (27), which is coupled to means (28) adapted to move it longitudinally and of which the free external end is adapted to cooperate with one of the positioning channels (29) formed on the internal face of the ring (9).

10. A device according to any one of Claims 1 to 8, characterised in that the servo-motors (4a, 12 and 18) are provided with a brake locking them in a stationary position and constituting indexing means.
